# EUROPÄISCHE PATENTANMELDUNG

(11) **EP 4 116 675 A1**
(43) Veröffentlichungstag der Anmeldung: **11.01.2023**
(21) Anmeldenummer: 22183331.2
(22) Anmeldetag: 06.07.2022
(51) Int. Cl.: G01C 21/20

(54) **SELBSTLOKALISIERUNG EINES FAHRZEUGS BASIEREND AUF EINER INITIALEN POSE**

(30) Priorität: 09.07.2021 DE 102021117744
(71) Anmelder: VOLKSWAGEN AG, 38440 Wolfsburg (DE); CARIAD SE, 38440 Wolfsburg (DE)
(72) Erfinder: HOLICKI, Dr. Michael, 13505 Berlin (DE); HÄNSEL, Ralph, 12437 Berlin (DE); IKEN, Timo, 38440 Wolfsburg (DE); KUBE, Dr. Roland, 38179 Schwülper (DE); LAST, Dr. Carolin, 38102 Braunschweig (DE); WAPPLER, Dr. Stefan, 10717 Berlin (DE)
(74) Vertreter: Hofstetter, Schurack & Partner

(57) **Zusammenfassung**

Gemäß einem Verfahren zur Selbstlokalisierung wird ein Fahrzeug (2) mittels eines fahrzeugexternen Sensorsystems (5a, 5b) einer Parkinfrastruktur detektiert, wenn es sich in einem Erfassungsbereich des fahrzeugexternen Sensorsystems (5a, 5b) befindet. Mittels einer fahrzeugexternen Kommunikationsschnittstelle (7) der Parkinfrastruktur wird abhängig von der Detektion des Fahrzeugs (2) eine Positionsinformation betreffend den Erfassungsbereich an wenigstens eine Fahrzeugrecheneinheit (3) übermittelt und mittels der wenigstens einen Fahrzeugrecheneinheit (3) wird eine initiale Pose des Fahrzeugs (2) abhängig von der Positionsinformation bestimmt.

## Beschreibung

Die vorliegende Erfindung betrifft ein Verfahren und ein System zur Selbstlokalisierung eines Fahrzeugs in einer Parkinfrastruktur.

Kartenbasierte Selbstlokalisierungsverfahren können insbesondere für autonome Fahrzeuge oder teilweise automatisierte Fahrfunktionen, beispielsweise in einer Parkumgebung, vorteilhaft sein. Solche Selbstlokalisierungsverfahren beruhen auf dem Abgleich von Objekten, die mittels Umfeldsensorsystemen des Fahrzeugs detektiert wurden mit Objekten aus einer digitalen Karte. Aus diesem Abgleich wird die Position des Fahrzeugs bestimmt. Solche Objekte können auch als Landmarken bezeichnet werden.

Globale Selbstlokalisierungsverfahren funktionieren dabei ohne Vorinformation über die Pose des Fahrzeugs. Solche Verfahren benötigen streng eindeutige und unverwechselbare Landmarken, etwa AR-Marker. Lokale Selbstlokalisierungsverfahren benutzen eine initiale Posenschätzung für das Fahrzeug. Diese Verfahren haben den Vorteil, auch mit Landmarken arbeiten zu können, die nicht global eindeutig sind.

Eine Möglichkeit für die initiale Posenschätzung ist es, Signale eines globalen Navigationssatellitensystems, GNSS, auszuwerten. Dies hat den Nachteil, dass der Empfang von GNSS Signalen durch die Umgebungsbedingungen beeinträchtigt sein kann, insbesondere in Parkhäusern. Die initiale Posenschätzung ist daher gegebenenfalls ungenau und/oder unzuverlässig, was in der Folge auch zu einer ungenauen und/oder unzuverlässigen Selbstlokalisierung des Fahrzeugs führen kann.

Dokument DE 10 2014 218 456 A1 beschreibt ein Leitsystem eines Fahrzeugs und ein Verfahren zum Parken des Fahrzeuges in einer Parkeinrichtung, wobei das Leitsystem mindestens einen Sensor, beispielsweise eine Kamera, und eine Steuerungseinrichtung zum Verarbeiten der Sensordaten des Sensors aufweist. Der Sensor des Fahrzeuges kann in der Parkeinrichtung angebrachte Signalisierungselemente, wie etwa optische Leuchtstreifen erfassen und die Steuerungseinrichtung kann die Sensordaten auswerten, die Signalisierungselemente erkennen und Steuerbefehle für einen Aktor des Fahrzeuges zur Steuerung des Fahrzeuges generieren, um das Fahrzeug autonom zu parken.

Es ist eine Aufgabe der vorliegenden Erfindung, die Zuverlässigkeit und/oder Genauigkeit der Selbstlokalisierung eines Fahrzeugs zu erhöhen.

Diese Aufgabe wird durch den jeweiligen Gegenstand der unabhängigen Ansprüche gelöst. Vorteilhafte Weiterbildungen und bevorzugte Ausführungsformen sind Gegenstand der abhängigen Ansprüche.

Die Erfindung beruht auf der Idee, das Fahrzeug mittels eines fahrzeugexternen Sensorsystems zu detektieren und dem Fahrzeug eine entsprechende Positionsinformation zur Verfügung zu stellen, damit eine Fahrzeugrecheneinheit die initiale Pose des Fahrzeugs bestimmen kann.

Gemäß einem Aspekt der Erfindung wird ein Verfahren zur Selbstlokalisierung eines Fahrzeugs, insbesondere eines Kraftfahrzeugs, in einer Parkinfrastruktur angegeben, wobei das Fahrzeug mittels eines fahrzeugexternen Sensorsystems der Parkinfrastruktur detektiert wird, wenn sich das Fahrzeug in einem Erfassungsbereich des fahrzeugexternen Sensorsystems befindet. Mittels einer fahrzeugexternen Kommunikationsschnittstelle der Parkinfrastruktur wird abhängig von der Detektion des Fahrzeugs eine Positionsinformation betreffend den Erfassungsbereich an wenigstens eine Fahrzeugrecheneinheit des Fahrzeugs übermittelt, insbesondere über eine Kommunikationsschnittstelle des Fahrzeugs oder der Fahrzeugrecheneinheit. Mittels der wenigstens einen Fahrzeugrecheneinheit wird eine initiale Pose des Fahrzeugs abhängig von der Positionsinformation bestimmt.

Unter der Selbstlokalisierung kann insbesondere verstanden werden, dass das Fahrzeug selbst, insbesondere die Fahrzeugrecheneinheit, die initiale Pose und/oder eine weitere Pose zu einem späteren Zeitpunkt bestimmt.

Bei der Parkinfrastruktur kann es sich beispielsweise um ein Parkhaus, einen Parkplatz oder eine sonstige Parkfläche handeln. Die Parkinfrastruktur weist mehrere Parkplätze auf in denen Kraftfahrzeuge, insbesondere Autos, parken können. Beispielsweise kann es sich um eine Parkinfrastruktur zum Valet-Parken handeln, wobei das Fahrzeug von einem menschlichen Fahrer oder Benutzer bis in eine Einfahrtzone der Parkinfrastruktur gebracht wird. Der Fahrer oder Benutzer kann dann das Fahrzeug verlassen und anschließend kann das Fahrzeug autonom einparken.

Bei dem Verfahren handelt es sich dann also um ein Verfahren zur Selbstlokalisierung eines vollautonom fahrbaren Fahrzeugs, auch als selbstfahrendes Fahrzeug bezeichnet. In anderen Ausführungsformen ist das Fahrzeug jedoch nicht notwendigerweise zum vollautonomen Fahren ausgestaltet. Beispielsweise kann die Selbstlokalisierung dann für teilautonome Fahrfunktionen oder zur Fahrerassistenz verwendet werden.

Das fahrzeugexterne Sensorsystem beziehungsweise der Erfassungsbereich kann beispielsweise in der Einfahrtzone oder in der Nähe der Einfahrtzone angeordnet sein.

Das fahrzeugexterne Sensorsystem kann in verschiedenen Ausführungsformen des Verfahrens unterschiedlicher Art sein. Beispielsweise kann es eine oder mehrere Kameras, eine oder mehrere Lichtschranken oder einen oder mehrere sonstige optische Sensoren beinhalten. Das fahrzeugexterne Sensorsystem kann auch einen induktiven Sensor, beispielsweise eine oder mehrere Induktionsschleifen, die beispielsweise in einer Fahrbahn integriert sein können, beinhalten. Das fahrzeugexterne Sensorsystem kann aber auch einen manuell zu bedienenden Taster, Knopf oder eine berührungsempfindliche Oberfläche, also beispielsweise einen Soft-Key oder einen berührungsempfindlichen Bildschirm beinhalten. Das fahrzeugexterne Sensorsystem kann außerdem eine Auswerteeinheit beinhalten, welche die erfassten Rohdaten auswerten und/oder verarbeiten kann, um das Fahrzeug in dem Erfassungsbereich zu detektieren.

Der Erfassungsbereich kann dann beispielsweise einem Sichtfeld oder Detektionsbereich der einen oder mehreren Kameras, der einen oder mehreren optischen Sensoren, der Lichtschranken oder des induktiven Sensors entsprechen. Der Erfassungsbereich kann auch einem vordefinierten Bereich um den Taster, Knopf et cetera herum entsprechen.

Hier und im Folgenden kann der Begriff "Licht" derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht.

Die Pose des Fahrzeugs beinhaltet die Position des Fahrzeugs und kann beispielsweise die Orientierung des Fahrzeugs beninhalten, insbesondere in einem Kartenkoordinatensystem einer vorgegebenen digitalen Karte. Die initiale Pose entspricht also einer Kombination aus einer initialen Position und/oder initialen Orientierung in dem Kartenkoordinatensystem. Die Position und die Lage des Erfassungsbereichs in dem Kartenkoordinatensystem sind vorab bekannt. Aus der Positionsinformation betreffend den Erfassungsbereich kann also auf die initiale Position des Fahrzeugs und gegebenenfalls auf die initiale Orientierung des Fahrzeugs geschlossen werden, so dass insbesondere die initiale Pose abgeschätzt oder eingegrenzt werden kann. In verschiedenen Ausführungsformen können auch weitere Informationen oder Annahmen bezüglich der relativen Position und/oder relativen Orientierung des Fahrzeugs innerhalb des Erfassungsbereichs getroffen werden. Entspricht der Erfassungsbereich beispielsweise einem Abschnitt einer Fahrbahn, so kann davon ausgegangen werden, dass die initiale Orientierung des Fahrzeugs der Ausrichtung der Fahrbahn entspricht und so weiter. Alternativ kann die relative Orientierung und/oder die relative Position des Fahrzeugs in dem Erfassungsbereich auch basierend auf Sensordaten des fahrzeugexternen Sensorsystems, beispielsweise basierend auf entsprechenden Kamerabildern, bestimmt werden.

Die initiale Pose kann als Ergebnis des Verfahrens zur Selbstlokalisierung angesehen werden. Die initiale Pose kann aber auch als Ausgangspunkt für eine Abschätzung einer späteren Pose oder einer Pose zu einem späteren Zeitpunkt des Fahrzeugs innerhalb der Parkinfrastruktur benutzt werden.

Durch die Bestimmung der initialen Pose können dadurch gegebenenfalls uneindeutige Landmarken in der Parkinfrastruktur, wie etwa Fahrbahnmarkierungslinien oder Kreuzungspunkten von Fahrbahnmarkierungslinien und so weiter, in Kombination mit der initialen Pose eindeutig bestimmbar sein. So kann eine zuverlässigere oder genauere Selbstlokalisierung des Fahrzeugs erreicht werden.

Indem die Positionsinformation durch das fahrzeugexterne Sensorsystem, das lokal in der Parkinfrastruktur angeordnet ist, erfasst und bereitgestellt wird, können Ungenauigkeiten bei der Bestimmung der initialen Pose durch eingeschränkten Satellitenempfang oder dergleichen vermieden werden.

Gemäß zumindest einer Ausführungsform des Verfahrens zur Selbstlokalisierung werden mittels eines Umfeldsensorsystems des Fahrzeugs Umfeldsensordaten erzeugt, welche eine Umgebung des Fahrzeugs darstellen. Mittels der wenigstens einen Fahrzeugrecheneinheit wird basierend auf den Umfeldsensordaten eine Landmarke in der Umgebung detektiert. Die detektierte Landmarke wird mittels der wenigstens einen Fahrzeugrecheneinheit mit der digitalen Karte abgeglichen. Eine derzeitige Pose des Fahrzeugs wird mittels der wenigstens einen Fahrzeugrecheneinheit abhängig von der initialen Pose und einem Ergebnis des Abgleichs bestimmt.

Die digitale Karte, die auch als hochauflösende Karte oder HD-Karte bezeichnet werden kann, kann beispielsweise auf einem Speicherelement des Fahrzeugs, insbesondere der wenigstens einen Fahrzeugrecheneinheit, gespeichert sein. Alternativ oder zusätzlich kann die digitale Karte auch auf einem fahrzeugexternen Speicherelement der Parkinfrastruktur gespeichert sein. Die digitale Karte kann dann beispielsweise mittels der fahrzeugexternen Kommunikationsschnittstelle an die wenigstens eine Fahrzeugrecheneinheit übermittelt werden, um den Abgleich zu ermöglichen.

Die Positionsinformation betreffend den Erfassungsbereich kann beispielsweise eine Position und/oder Orientierung des Erfassungsbereichs in dem Kartenkoordinatensystem beinhalten. Alternativ oder zusätzlich kann die Positionsinformation auch die relative Position und/oder relative Orientierung des Fahrzeugs innerhalb des Erfassungsbereichs beinhalten. Die Positionsinformation kann auch als Poseninformation bezeichnet werden.

Das Detektieren der Landmarke beinhaltet beispielsweise das Bestimmen einer relativen Position und/oder Orientierung der Landmarke bezüglich des Fahrzeugs, also in einem vorgegebenen Sensorkoordinatensystem des Umfeldsensorsystems oder einem vorgegebenen Fahrzeugkoordinatensystem des Fahrzeugs, sowie die Bestimmung eines oder mehrerer Deskriptoren der Landmarke. Die Deskriptoren können beispielsweise eine Art, eine Größe und/oder weitere Eigenschaften der Landmarke beinhalten.

Bei der Landmarke kann es sich beispielsweise um eine oder mehrere Fahrbahnmarkierungslinien, einen Schnittpunkt von Fahrbahnmarkierungslinien, ein Verkehrs- oder Hinweisschild oder eine sonstiges Schild, eine metallische Struktur, beispielsweise in oder an einer Wand oder einem sonstigen Teil eines Bauwerks der Parkinfrastruktur, oder um eine sonstige Komponente der Parkinfrastruktur handeln.

Die Position und/oder Orientierung der Landmarke ist in dem Kartenkoordinatensystem vorgegeben und in der Karte gespeichert. Das Abgleichen der detektierten Landmarke mit der digitalen Karte beinhaltet daher insbesondere das Bestimmen, wo im Kartenkoordinatensystem sich eine Landmarke mit entsprechenden Deskriptoren befindet. Bei global nicht eindeutigen Landmarken, etwa Fahrbahnmarkierungslinien oder Schnittpunkten von Fahrbahnmarkierungslinien, kann ein solcher Abgleich potentiell mehrere Möglichkeiten ergeben. Durch die Kombination des Ergebnisses des Abgleichs mit der initialen Pose kann die Landmarke in der digitalen Karte eindeutig identifiziert werden. Da aus den Umfeldsensordaten die relative Position der Landmarke bezüglich des Fahrzeugs bekannt ist, kann daher die derzeitige Pose des Fahrzeugs basierend auf der Position der identifizierten Landmarke in dem Kartenkoordinatensystem bestimmt werden.

Das Umfeldsensorsystem des Fahrzeugs kann beispielsweise eine oder mehrere Kameras, Lidarsysteme oder sonstige optische Sensorsysteme, eines oder mehrere Ultraschallsensorsysteme und/oder eines oder mehrere Radarsysteme beinhalten.

Gemäß zumindest einer Ausführungsform werden, insbesondere mittels der wenigstens einen Fahrzeugrecheneinheit, im Rahmen des Abgleichs, also insbesondere um den Abgleich durchzuführen, der detektierten Landmarke mit der digitalen Karte zwei oder mehr in der digitalen Karte gespeicherte Referenzlandmarken identifiziert. Mittels der wenigstens einen Fahrzeugrecheneinheit wird abhängig von der initialen Pose genau eine der zwei oder mehr Referenzlandmarken ausgewählt. Die derzeitige Pose wird mittels der wenigstens einen Fahrzeugrecheneinheit basierend auf der ausgewählten Referenzlandmarke bestimmt.

Die zwei oder mehr Referenzlandmarken entsprechen den oben beschriebenen mehreren Möglichkeiten, die der Abgleich für eine Landmarke der digitalen Karte ergeben kann. So kann eine eindeutige Selbstlokalisierung des Fahrzeugs erreicht werden, auch wenn die Landmarken an sich zunächst global nicht eindeutig sind.

Gemäß zumindest einer Ausführungsform wird die digitale Karte mittels der fahrzeugexternen Kommunikationsschnittstelle an die wenigstens eine Fahrzeugrecheneinheit übermittelt, insbesondere vor dem Abgleich der detektierten Landmarke mit der digitalen Karte.

Dies hat den Vorteil, dass auf dem Fahrzeug selbst nicht notwendigerweise Karteninformationen verschiedener Parkinfrastrukturen und so weiter gespeichert sein müssen, sondern dass die jeweils aktuelle digitale Karte der konkreten Parkinfrastruktur stets zuverlässig bereitgestellt werden kann.

Gemäß zumindest einer Ausführungsform wird mittels einer Signalquelle des fahrzeugexternen Sensorsystems ein elektromagnetisches Signal in Richtung des Erfassungsbereichs, insbesondere des Fahrzeugs, emittiert, wenn sich das Fahrzeug in dem Erfassungsbereich befindet. Von dem Fahrzeug reflektierte Anteile des elektromagnetischen Signals werden mittels eines Detektors des fahrzeugexternen Sensorsystems detektiert und das Fahrzeug wird mittels des fahrzeugexternen Sensorsystems abhängig von den detektierten reflektierten Anteilen in dem Erfassungsbereich detektiert.

Bei dem elektromagnetischen Signal kann es sich um ein Funksignal, insbesondere ein für ein Radarsystem geeignetes Funksignal, ein optisches Signal, also insbesondere ein Lichtsignal, beispielsweise ein Lasersignal, oder um ein sonstiges elektromagnetisches Signal handeln.

Mit anderen Worten beinhaltet das fahrzeugexterne Sensorsystem in solchen Ausführungsformen ein aktives Sensorsystem, das im Falle von Licht als elektromagnetischem Signal auch als aktives optisches Sensorsystem bezeichnet werden kann.

Gemäß zumindest einer Ausführungsform wird mittels einer Signalquelle des fahrzeugexternen Sensorsystems, insbesondere mittels einer Lichtquelle, ein Lichtstrahl in Richtung des Fahrzeugs, insbesondere in Richtung des Erfassungsbereichs oder in den Erfassungsbereich, wenn sich das Fahrzeug in dem Erfassungsbereich befindet, emittiert. Eine Unterbrechung des Lichtstrahls durch das Fahrzeug wird mittels des fahrzeugexternen Sensorsystems erkannt, um das Fahrzeug in dem Erfassungsbereich zu detektieren.

Mit anderen Worten enthält das fahrzeugexterne Sensorsystem in solchen Ausführungsformen eine Lichtschranke.

Gemäß zumindest einer Ausführungsform wird mittels einer Kamera des fahrzeugexternen Sensorsystems ein Kamerabild erzeugt, welches das Fahrzeug, insbesondere das Fahrzeug in dem Erfassungsbereich sowie den Erfassungsbereich, abbildet, um das Fahrzeug in dem Erfassungsbereich zu detektieren.

Dazu kann das Kamerabild beispielsweise mittels der Auswerteeinheit des fahrzeugexternen Sensorsystems ausgewertet werden, um das Fahrzeug in dem Erfassungsbereich zu identifizieren, insbesondere als Fahrzeug oder als ein bestimmtes Fahrzeug zu identifizieren und dem entsprechend zu detektieren.

Gemäß zumindest einer Ausführungsform wird, insbesondere mittels der Auswerteeinheit des fahrzeugexternen Sensorsystems, basierend auf dem Kamerabild eine relative Position des Fahrzeugs in dem Kamerabild und/oder eine relative Orientierung des Fahrzeugs in dem Kamerabild identifiziert. Die relative Position und/oder die relative Orientierung in dem Kamerabild wird mittels der fahrzeugexternen Kommunikationsschnittstelle an die wenigstens eine Fahrzeugrecheneinheit übermittelt. Die initiale Pose des Fahrzeugs wird, insbesondere mittels der wenigstens einen Fahrzeugrecheneinheit, abhängig von der relative Position und/oder der relativen Orientierung des Fahrzeugs in dem Kamerabild identifiziert. In alternativen Ausführungsformen übermittelt die fahrzeugexternen Kommunikationsschnittstelle das Kamerabild an die wenigstens eine Fahrzeugrecheneinheit und die wenigstens eine Fahrzeugrecheneinheit bestimmt die relative Position des Fahrzeugs in dem Kamerabild und/oder die relative Orientierung des Fahrzeugs in dem Kamerabild basierend auf dem Kamerabild.

Beispielsweise kann basierend auf dem Kamerabild ein Kennzeichenschild, auch als Nummernschild bezeichnet, des Fahrzeugs detektiert und ausgelesen werden. Dem Fahrzeug, insbesondere der wenigstens einen Fahrzeugrecheneinheit, kann dann die entsprechend festgestellte relative Position und/oder Orientierung des Kennzeichenschilds in dem Kamerabild und somit in dem Kartenkoordinatensystem mittels der fahrzeugexternen Kommunikationsschnittstelle bereitgestellt werden. Die wenigstens eine Fahrzeugrecheneinheit kann dann basierend darauf die initiale Pose bestimmen.

Um die erforderliche Datensicherheit zu gewährleisten, können entsprechende Verschlüsselungsverfahren eingesetzt werden.

Gemäß zumindest einer Ausführungsform wird, insbesondere mittels eines Benutzers oder Fahrers des Fahrzeugs, eine Benutzerschnittstelle zum Öffnen einer Vorrichtung zum Sperren eines Fahrweges für das Fahrzeug betätigt. Die Betätigung der Benutzerschnittstelle, die insbesondere Teil des fahrzeugexternen Sensorsystems sein kann, wird mittels des fahrzeugexternen Sensorsystems detektiert, um das Fahrzeug in dem Erfassungsbereich zu detektieren.

Bei der Vorrichtung zum Sperren des Fahrweges kann es sich beispielsweise um eine Schranke, um ein Rolltor oder eine sonstige Barriere handeln. Die Benutzerschnittstelle kann einen oder mehrere Knöpfe, Taster, Soft-Keys und/oder Hard-Keys beinhalten. Die Benutzerschnittstelle kann auch eine Kartenleseeinheit zum Lesen einer Benutzerkarte, beispielsweise zum drahtlosen Lesen einer Benutzerkarte, beinhalten, die durch Vorhalten oder Einführen einer Benutzerkarte betätigt wird.

Auf diese Weise können mit Vorteil bereits in der Parkinfrastruktur vorhandene Interaktionspunkte als fahrzeugexternes Sensorsystem oder als Teil des fahrzeugexternen Sensorsystems oder als Eingabe für das fahrzeugexterne Sensorsystem fungieren.

Gemäß einem weiteren Aspekt der Erfindung wird ein System zur Selbstlokalisierung eines Fahrzeugs in einer Parkinfrastruktur angegeben. Das System weist ein fahrzeugexternes Sensorsystem für die Parkinfrastruktur auf, wobei das fahrzeugexterne Sensorsystem dazu eingerichtet ist, das Fahrzeug zu detektieren, wenn sich das Fahrzeug in einem Erfassungsbereich des fahrzeugexternen Sensorsystems befindet. Das System zur Selbstlokalisierung weist wenigstens eine Fahrzeugrecheneinheit für das Fahrzeug auf, sowie eine fahrzeugexterne Kommunikationsschnittstelle für die Parkinfrastruktur. Die fahrzeugexterne Kommunikationsschnittstelle ist dazu eingerichtet, abhängig von der Detektion des Fahrzeugs eine Positionsinformation betreffend den Erfassungsbereich an die wenigstens eine Fahrzeugrecheneinheit zu übermitteln. Hierzu kann das System beispielsweise eine Fahrzeugkommunikationsschnittstelle für das Fahrzeug aufweisen, die zum Erhalt der Positionsinformation eingerichtet ist. Die wenig eine Fahrzeugrecheneinheit ist dazu eingerichtet, eine initiale Pose des Fahrzeugs abhängig von der Positionsinformation zu bestimmen.

Weitere Ausführungsformen des Systems zur Selbstlokalisierung gemäß der Erfindung folgen aus den verschiedenen Ausführungsformen des erfindungsgemäßen Verfahrens zur Selbstlokalisierung und umgekehrt. Insbesondere kann ein erfindungsgemäßes System dazu eingerichtet sein, ein erfindungsgemäßes Verfahren auszuführen oder es führt ein solches Verfahren aus.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung umfasst auch die Kombinationen der Merkmale der beschriebenen Ausführungsformen.

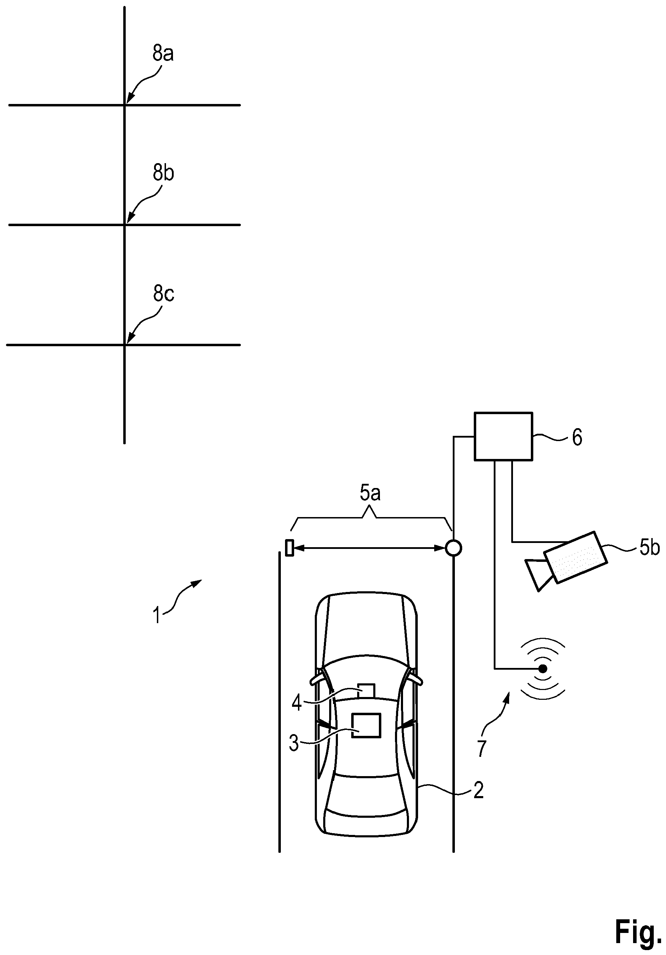

In der einzigen Figur zeigt:
- Fig.: schematisch eine beispielhafte Ausführungsform eines erfindungsgemäßen Systems zur Selbstlokalisierung eines Fahrzeugs in einer Parkinfrastruktur.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

Die Fig. zeigt dabei das Fahrzeug 2, das sich im Zufahrtsbereich einer Parkinfrastruktur befindet. Das System 1 zur Selbstlokalisierung des Fahrzeugs 2 weist eine Fahrzeugrecheneinheit 3 auf, die beispielsweise eines oder mehrere elektronische Steuergeräte ECU, das Fahrzeug 2 enthalten kann oder Teil eines ECU sein kann. Das System 1 weist außerdem ein fahrzeugexternes Sensorsystem auf, beispielsweise eine Lichtschranke 5a und/oder eine Kamera 5b, sowie eine mit der Lichtschranke 5a und/oder der Kamera 5b gekoppelte Auswerteeinheit 6. Das System 1 weist außerdem eine mit der Auswerteeinheit 6 beziehungsweise mit dem fahrzeugexternen Sensorsystem verbundene fahrzeugexterne Kommunikationsschnittstelle 7 zur drahtlosen Datenübermittlung von Daten an die Fahrzeugrecheneinheit 3 auf.

Wenn das Fahrzeug 2 nun den Erfassungsbereich der Lichtschranke 5a durchfährt, so erkennt die Auswerteeinheit 6 die Präsenz des Fahrzeugs 2 in dem entsprechenden Erfassungsbereich. Die Position der Lichtschranke 5a ist in einer vorgegebenen digitalen Karte (nicht gezeigt) gespeichert. Die digitale Karte kann auf der Auswerteeinheit 6 und/oder der Fahrzeugrecheneinheit 3 und/oder einer sonstigen Recheneinheit der Parkinfrastruktur gespeichert sein. In Reaktion auf die Detektion des Fahrzeugs 2 beim Durchfahren der Lichtschranke 5a kann die Auswerteeinheit 6 über die fahrzeugexterne Kommunikationsschnittstelle 7 entsprechende Positionsinformationen an die Fahrzeugrecheneinheit 3 übertragen. Die Fahrzeugrecheneinheit 3 kann dann die initiale Position des Fahrzeugs 2 im Kartenkoordinatensystem der digitalen Karte basierend auf der Positionsinformation bestimmen. Beispielsweise kann die Fahrbahn im Erfassungsbereich beziehungsweise im Eingangsbereich der Parkinfrastruktur ebenfalls vorgegeben sein, so dass die Fahrzeugrecheneinheit 3 die initiale Pose des Fahrzeugs 2 bestimmen kann. Alternativ oder zusätzlich zur Detektion des Fahrzeugs 2 mittels der Lichtschranke 5a kann die Kamera 5b ein Kamerabild erzeugen, welches das Fahrzeug 2 im Sichtfeld der Kamera 5b abbildet und basierend darauf kann die Auswerteeinheit 6 über die Kommunikationsschnittstelle 7 die Positionsinformation an die Fahrzeugrecheneinheit 3 übermitteln.

Die Kamera 5b kann beispielsweise derart kalibriert und in das Kartenkoordinatensystem eingemessen sein, dass das entsprechende Sichtfeld in dem Kartenkoordinatensystem genau bekannt ist.

Statt oder zusätzlich zur Lichtschranke 5a kann auch eine mechanische Schranke, die beispielsweise durch Drücken eines Knopfes geöffnet werden kann, eingesetzt werden, so dass beispielsweise auch die Information übertragen werden kann, auf welcher Einfahrtsspur sich das Fahrzeug 2 befindet, um die Position und/oder Orientierung des Fahrzeugs 2 noch genauer bestimmen zu können.

Basierend auf dem Kamerabild kann die Auswerteeinheit 6 in verschiedenen Ausführungsformen auch ein Nummernschild des Fahrzeugs 2 detektieren und auslesen und dem Fahrzeug 2 die so bestimmte Position des eigenen Nummernschildes übermitteln. Um zu verhindern, dass die Daten betreffend das Nummernschild von anderen, gegebenenfalls unbefugten Fahrzeugen oder Personen mitgelesen werden können, kann ein Verschlüsselungsverfahren, beispielsweise ein auf einem Public Key beruhendes Verschlüsselungsverfahren, eingesetzt werden.

Hierzu kann beispielsweise jedes Fahrzeug einen entsprechenden Public Key an die Parkinfrastruktur, insbesondere die Auswerteeinheit 6 übermitteln. Die Auswerteeinheit 6 kann die dann basierend auf dem Kamerabild detektierten Daten mit dem entsprechenden Public Key verschlüsseln und über eine öffentliche Übertragungsstrecke bereitstellen. Jedes der Fahrzeuge kann seinen zugehörigen Private Key verwenden, um die jeweils für das Fahrzeug vorgesehene Nachricht zu entschlüsseln.

Die Funkübertragungsstrecke zur Übertragung der Positionsinformation kann in verschiedenen Ausführungsformen auch zur Übertragung weiterer Informationen verwendet werden. So kann das Fahrzeug 2 beispielsweise wie beschrieben den Public Key oder sonstige fahrzeugspezifische Informationen, die für das Parken relevant sind, etwa ein Schwerbehindertenstatus des Fahrers, eine Größe oder Übergröße des Fahrzeugs und so weiter, an die Auswerteeinheit 6 übermitteln. Die Auswerteeinheit 6 kann auch einen Public Key zur Absicherung der Upload-Daten, die digitale Karte, eine Position eines Zielparkplatzes und/oder eine vorgeschlagene Route zum Zielparkplatz über die Kommunikationsschnittstelle 7 an die Fahrzeugrecheneinheit 3 übermitteln.

Nachdem die initiale Pose des Fahrzeugs 2 bestimmt wurde, kann sich das Fahrzeug 2, beispielsweise autonom, in der Parkinfrastruktur bewegen. Zu einem späteren Zeitpunkt kann ein Umfeldsensorsystem 4 des Fahrzeugs 2, beispielsweise ein Radarsystem, ein Lidarsystem und/oder ein Kamerasystem des Fahrzeugs 2, entsprechende Umfeldsensordaten erzeugen, um in der Parkinfrastruktur vorhandene Landmarken 8a, 8b, 8c zu detektieren. Im nicht beschränkenden Beispiel der Fig. können die Landmarken 8a, 8a, 8c beispielsweise Schnittpunkten von Fahrbahnmarkierungslinien, beispielsweise zur Definition von Parkplätzen, beinhalten.

Die detektierte Landmarke 8a, 8b, 8c kann mittels der Fahrzeugrecheneinheit 3 mit der digitalen Karte abgeglichen werden und zusammen mit der initialen Pose eindeutig identifiziert werden, so dass eine aktuelle oder derzeitige Pose des Fahrzeugs 2 mit hoher Genauigkeit und Zuverlässigkeit bestimmt werden kann.

Wie insbesondere bezüglich der Figur beschrieben, ermöglicht es die Erfindung, bei der Selbstlokalisierung von Fahrzeugen, insbesondere autonomen Fahrzeugen, eine höhere Genauigkeit und Zuverlässigkeit zu erreichen. Insbesondere ermöglicht es die Erfindung, lokal mit Landmarken zu arbeiten, die global nicht notwendigerweise eindeutig sind, etwa Markierungslinien von Parkbuchten und so weiter.

Da insbesondere autonome Fahrfunktionen sicherheitsrelevant sind, kann in verschiedenen Ausführungsformen sichergestellt werden, dass die verarbeiteten Informationen die entsprechende Sicherheitseinstufung oder die entsprechenden Sicherheitsanforderungen, etwa gemäß ASIL-B, erfüllen. Mit Vorteil kann die initiale Pose des Fahrzeugs also in verschiedenen Ausführungsformen zu einem Zeitpunkt bestimmt werden, zu dem es noch von einem menschlichen Bediener gesteuert wird oder zumindest bevor der menschliche Bediener das Fahrzeug verlässt. Die dann damit initialisierte landmarkenbasierte Lokalisierung kann die initiale Pose plausibilisieren und gegebenenfalls verfeinern und erst dann das autonome Fahren freigeben, wenn die Selbstlokalisierung einen hinreichenden Sicherheitsgrad erreicht hat.

Zusätzliche Sicherheit kann durch die Kombination der verschiedenen Posenschätzungsverfahren erreicht werden.

In verschiedenen Ausführungsformen kann die initiale Pose anhand nicht auffälliger oder ohnehin in der Parkinfrastruktur vorhandener Marker ermittelt werden, beispielsweise zusätzlich zu der beschriebenen Ermittlung anhand des fahrzeugexternen Sensorsystems, beispielsweise um durch Redundanz eine erhöhte Sicherheit und Zuverlässigkeit zu erzeugen. Die nicht auffälligen Marker können beispielsweise Logos oder Werbeschilder beinhalten oder sonstige Objekte, deren Position in den Koordinaten der digitalen Karte bekannt sind. Diese Marker können von dem Umfeldsensorsystem des Fahrzeugs, insbesondere der Fahrzeugkamera, detektiert werden. Da sowohl die Größe als auch die Position des Markers in den Kartenkoordinaten bekannt sind, kann das Fahrzeug so seine initiale Pose bestimmen. Die Verwendung nicht auffälliger Marker kann zur Verfeinerung der Informationen basierend auf dem fahrzeugexternen Sensorsystem genutzt werden oder alleinstehend. Mit Vorteil können in solchen Ausführungsformen nicht nur geometrische Eigenschaften des Markers, sondern auch inhaltliche Eigenschaften des Markers, beispielsweise Text- oder Bildinhalte und so weiter ausgewertet werden, um eine möglichst eindeutige global unverwechselbare Posenschätzung zu erreichen.

### Bezugszeichenliste

- 1: System zur Selbstlokalisierung
- 2: Fahrzeug
- 3: Fahrzeugrecheneinheit
- 4: Umfeldsensorsystem
- 5a: Lichtschranke
- 5b: Kamera
- 6: Auswerteeinheit
- 7: Kommunikationsschnittstelle
- 8a, 8b, 8c: Landmarken

## Patentansprüche

1. Verfahren zur Selbstlokalisierung eines Fahrzeugs (2) in einer Parkinfrastruktur,
**dadurch gekennzeichnet, dass**
- das Fahrzeug (2) mittels eines fahrzeugexternen Sensorsystems (5a, 5b) der Parkinfrastruktur detektiert wird, wenn sich das Fahrzeug (2) in einem Erfassungsbereich des fahrzeugexternen Sensorsystems (5a, 5b) befindet;
- mittels einer fahrzeugexternen Kommunikationsschnittstelle (7) der Parkinfrastruktur abhängig von der Detektion des Fahrzeugs (2) eine Positionsinformation betreffend den Erfassungsbereich an wenigstens eine Fahrzeugrecheneinheit (3) übermittelt wird;
- mittels der wenigstens einen Fahrzeugrecheneinheit (3) eine initiale Pose des Fahrzeugs (2) abhängig von der Positionsinformation bestimmt wird.

2. Verfahren nach Anspruch 1,
**dadurch gekennzeichnet, dass**
- mittels eines Umfeldsensorsystems (4) des Fahrzeugs (2) Umfeldsensordaten erzeugt werden, die eine Umgebung des Fahrzeugs (2) darstellen;
- mittels der wenigstens einen Fahrzeugrecheneinheit (3) basierend auf den Umfeldsensordaten eine Landmarke (8a, 8b, 8c) in der Umgebung detektiert wird;
- die detektierte Landmarke (8a, 8b, 8c) mittels der wenigstens einen Fahrzeugrecheneinheit (3) mit einer digitalen Karte abgeglichen wird; und
- eine derzeitige Pose des Fahrzeugs (2) mittels der wenigstens einen Fahrzeugrecheneinheit (3) abhängig von der initialen Pose und einem Ergebnis des Abgleichs bestimmt wird.

3. Verfahren nach Anspruch 2,
**dadurch gekennzeichnet, dass**
- im Rahmen des Abgleichs der detektierten Landmarke (8a, 8b, 8c) mit der digitalen Karte zwei oder mehr in der digitalen Karte gespeicherte Referenzlandmarken identifiziert werden;
- abhängig von der initialen Pose genau eine der zwei oder mehr Referenzlandmarken ausgewählt wird; und
- die derzeitige Pose basierend auf der ausgewählten Referenzlandmarke bestimmt wird.

4. Verfahren nach einem der Ansprüche 2 oder 3,
**dadurch gekennzeichnet, dass**
die digitale Karte mittels der fahrzeugexternen Kommunikationsschnittstelle (7) an die wenigstens eine Fahrzeugrecheneinheit (3) übermittelt wird.

5. Verfahren nach einem der vorhergehenden Ansprüche,
**dadurch gekennzeichnet, dass**
- mittels einer Signalquelle des fahrzeugexternen Sensorsystems (5a, 5b) ein elektromagnetisches Signal in Richtung des Fahrzeugs (2) emittiert wird;
- von dem Fahrzeug (2) reflektierte Anteile des elektromagnetischen Signals mittels eines Detektors des fahrzeugexternen Sensorsystems (5a, 5b) detektiert werden; und
- das Fahrzeug (2) abhängig von den detektierten reflektierten Anteilen in dem Erfassungsbereich detektiert wird.

6. Verfahren nach einem der Ansprüche 1 bis 4,
**dadurch gekennzeichnet, dass**
- mittels einer Signalquelle des fahrzeugexternen Sensorsystems (5a, 5b) ein Lichtstrahl in Richtung des Fahrzeugs (2) emittiert wird;
- eine Unterbrechung des Lichtstrahls durch das Fahrzeug (2) mittels des fahrzeugexternen Sensorsystems (5a, 5b) erkannt wird, um das Fahrzeug (2) in dem Erfassungsbereich zu detektieren.

7. Verfahren nach einem der Ansprüche 1 bis 4,
**dadurch gekennzeichnet, dass**
mittels einer Kamera des fahrzeugexternen Sensorsystems (5a, 5b) ein Kamerabild erzeugt wird, welches das Fahrzeug (2) abbildet, um das Fahrzeug (2) in dem Erfassungsbereich zu detektieren.

8. Verfahren nach Anspruch 7,
**dadurch gekennzeichnet, dass**
- basierend auf dem Kamerabild eine relative Position des Fahrzeugs (2) in dem Kamerabild und/oder eine relative Orientierung des Fahrzeugs (2) in dem Kamerabild identifiziert wird; und
- die initiale Pose des Fahrzeugs (2) abhängig von der relative Position und/oder der relativen Orientierung bestimmt wird.

9. Verfahren nach einem der Ansprüche 1 bis 4,
**dadurch gekennzeichnet, dass**
- eine Benutzerschnittstelle zum Öffnen einer Vorrichtung zum Sperren eines Fahrweges für das Fahrzeug (2) betätigt wird;
- die Betätigung der Benutzerschnittstelle mittels des fahrzeugexternen Sensorsystems (5a, 5b) detektiert wird, um das Fahrzeug (2) in dem Erfassungsbereich zu detektieren.

10. System (1) zur Selbstlokalisierung eines Fahrzeugs (2) in einer Parkinfrastruktur,
**dadurch gekennzeichnet, dass**
- das System (1) ein fahrzeugexternes Sensorsystem (5a, 5b) aufweist, das dazu eingerichtet ist, das Fahrzeug (2) zu detektieren wird, wenn sich das Fahrzeug (2) in einem Erfassungsbereich des fahrzeugexternen Sensorsystems (5a, 5b) befindet;
- das System (1) wenigstens eine Fahrzeugrecheneinheit (3) sowie eine fahrzeugexterne Kommunikationsschnittstelle (7) aufweist, die dazu eingerichtet ist, abhängig von der Detektion des Fahrzeugs (2) eine Positionsinformation betreffend den Erfassungsbereich an die wenigstens eine Fahrzeugrecheneinheit (3) zu übermitteln;
- die wenigstens eine Fahrzeugrecheneinheit (3) dazu eingerichtet ist, eine initiale Pose des Fahrzeugs (2) abhängig von der Positionsinformation zu bestimmen.
